# EUROPÄISCHE PATENTSCHRIFT

(11) **EP 2 126 363 B1**
(45) Veröffentlichungstag und Bekanntmachung des Hinweises auf die Patenterteilung: **21.06.2017**
(21) Anmeldenummer: 07856896.1
(22) Anmeldetag: 19.12.2007
(51) Int. Cl.: F04D 13/08

(54) **TAUCHPUMPE**
SUBMERSIBLE PUMP
POMPE IMMERGÉE

(30) Priorität: 26.02.2007 DE 102007010726
(43) Veröffentlichungstag der Anmeldung: 02.12.2009
(73) Patentinhaber: Alfred Kärcher GmbH & Co. KG, 71364 Winnenden (DE)
(72) Erfinder: BECK, Bernhard, 70563 Stuttgart (DE); KOPKA, Kerstin, 71334 Waiblingen (DE); DIRNBERGER, Sven, 71642 Ludwigsburg (DE); SPENGLER, Timo, 71263 Weil der Stadt (DE)
(74) Vertreter: Hoeger, Stellrecht & Partner Patentanwälte mbB
(86) Internationale Anmeldenummer: PCT/EP2007/011173
(87) Internationale Veröffentlichungsnummer: WO 2008/104217

(56) Entgegenhaltungen:
- EP-A- 0 569 306
- DE-U1- 8 208 046
- FR-A- 2 158 770
- US-A- 5 061 157

## Beschreibung

Die Erfindung betrifft eine Tauchpumpe mit einem Gehäuse, das eine Ansaugöffnung zum Ansaugen von Flüssigkeit und eine Auslassöffnung zum Abgeben von Flüssigkeit aufweist und das einen Elektromotor aufnimmt, wobei der Elektromotor ein elektrisch leitendes Motorgehäuse umfasst, das an einen Schutzleiter anschließbar ist.

Mit Hilfe derartiger Tauchpumpen kann Flüssigkeit aus Behältern, Schächten, Räumen in Gebäuden und dergleichen abgepumpt werden. Hierzu umfasst die Tauchpumpe ein Gehäuse, das in die abzupumpende Flüssigkeit eingetaucht werden kann und das, beispielsweise an der Gehäuseunterseite, eine Ansaugöffnung aufweist, so dass die Flüssigkeit angesaugt, unter Druck gesetzt und über die beispielsweise an der Gehäuseoberseite angeordnete Auslassöffnung abgegeben werden kann. An die Auslassöffnung kann eine Förderleitung, beispielsweise ein Wasserschlauch angeschlossen werden.

Zum Antrieb der Pumpe umfasst diese einen Elektromotor, der an ein Spannungsversorgungsnetz angeschlossen werden kann. Er umfasst ein Motorgehäuse, das aus einem elektrisch leitenden Material, beispielsweise aus Metall, gefertigt ist. Das Motorgehäuse ist an einen Schutzleiter anschließbar. Dies stellt eine Schutzmaßnahme dar, um in einem Fehlerfall, bei dem spannungsführende Teile des Elektromotors mit dem Motorgehäuse in elektrischen Kontakt kommen, die elektrische Versorgungsspannung innerhalb sehr kurzer Zeit abtrennen zu können, indem über das Motorgehäuse ein Kurzschluss zwischen den spannungsführenden Teilen und dem Schutzleiter hergestellt wird. Die US 5 061 157 A1 offenbart eine solche Pumpe. Der Elektromotor sowie dessen Anschlussleitungen sind vor Wasser zu schützen. Hierzu ist das Motorgehäuse üblicherweise wasserdicht ausgestaltet und auch das Gehäuse der Tauchpumpe, das den Elektromotor aufnimmt, ist durch den Einsatz entsprechender Dichtungselemente derart ausgebildet, dass in den Bereich des Gehäuses, der den Elektromotor und dessen Anschlussleitungen aufnimmt, kein Wasser eindringen kann. Bei einem Defekt der Dichtungselemente oder auch bei einer fehlerhaften Montage ist allerdings nicht in allen Fällen auszuschließen, dass dennoch Wasser zu den elektrischen Anschlussleitungen und/oder zum Elektromotor gelangen kann. Dies hat die Gefahr zur Folge, dass der Benutzer mit der elektrischen Versorgungsspannung in Berührung kommt.

Aufgabe der vorliegenden Erfindung ist es, eine Tauchpumpe der eingangs genannten Art derart weiterzubilden, dass bei Eindringen von Wasser in den den Elektromotor aufnehmenden Gehäusebereich der Pumpe die Versorgungsspannung zuverlässig unterbrochen wird.

Diese Aufgabe wird bei einer Tauchpumpe der gattungsgemäßen Art erfindungsgemäß dadurch gelöst, dass das Gehäuse zur Aufnahme elektrischer Bauteile eine in der Gebrauchslage der Tauchpumpe oberhalb des Elektromotors angeordnete Steuerkammer ausbildet, in der eine mit dem Schutzleiter verbindbare elektrische Schutzkontaktanordnung angeordnet ist, wobei sich die Schutzkontaktanordnung bis in die Bereiche der Steuerkammer erstreckt, die bei über Kopf stehender oder eine stabile liegende Stellung einnehmender Tauchpumpe den tiefsten Punkt der Steuerkammer ausbilden.

In die Erfindung fließt der Gedanke mit ein, dass durch die Bereitstellung einer Schutzkontaktanordnung, die an den Schutzleiter anschließbar ist, bei Eindringen von Wasser in den den Elektromotor aufnehmenden Gehäusebereich die Versorgungsspannung innerhalb kurzer Zeit unterbrochen werden kann. Hierzu bildet das Gehäuse in der Gebrauchslage der Tauchpumpe oberhalb des Elektromotors zur Aufnahme elektrischer Bauteile eine Steuerkammer aus, in der die Schutzkontaktanordnung positioniert ist. Die Positionierung und Ausgestaltung der Schutzkontaktanordnung erfolgt dergestalt, dass sich die Schutzkontaktanordnung bis in diejenigen Bereiche der Steuerkammer erstreckt, die bei über Kopf stehender oder eine stabile liegende Stellung einnehmender Tauchpumpe den tiefsten Punkt der Steuerkammer ausbilden und daher zuerst mit eindringendem Wasser benetzt werden. Das Wasser kommt bei derartigen Stellungen der Tauchpumpe somit mit der Schutzkontaktanordnung in Berührung, die an den Schutzleiter angeschlossen ist. Falls das Wasser auch mit spannungsführenden Teilen in elektrischen Kontakt gerät, ist somit ein Kurzschluss über die Schutzkontaktanordnung und den Schutzleiter gewährleistet, so dass die Versorgungsspannung mittels einer elektrischen Sicherung innerhalb sehr kurzer Zeit abgetrennt werden kann. Nimmt die Tauchpumpe ihre Gebrauchslage ein, so bildet das Motorgehäuse des Elektromotors den tiefsten Punkt der Steuerkammer, d. h. eindringendes Wasser gelangt zuerst zum Motorgehäuse, das ebenfalls an den Schutzleiter angeschlossen ist, so dass auch bei einer derartigen Stellung der Tauchpumpe eindringendes Wasser nicht dazu führen kann, dass ein Benutzer mit der Versorgungsspannung in Berührung gerät.

Die Schutzkontaktanordnung ist bei einer vorteilhaften Ausführungsform an einer Deckenwand der Steuerkammer angeordnet. Die Deckenwand bildet bei über Kopf stehender Tauchpumpe den tiefsten Punkt der Steuerkammer aus und erstreckt sich bei liegender Stellung der Tauchpumpe, zumindest wenn diese eine stabile Lage einnimmt, bis an den tiefsten Punkt der Steuerkammer, so dass die an der Deckenwand angeordnete Schutzkontaktanordnung bei über Kopf stehender oder eine stabile liegende Stellung einnehmender Tauchpumpe sich bis zum tiefsten Punkt der Steuerkammer erstreckt und daher bei eindringendem Wasser zuerst von diesem benetzt wird.

Von besonderem Vorteil ist es, wenn die Steuerkammer eine Deckenwand sowie eine von der Deckenwand abstehende Seitenwand aufweist, und wenn sich die Schutzkontaktanordnung bis in den Eckbereich zwischen Deckenwand und Seitenwand erstreckt. Es kann beispielsweise vorgesehen sein, dass sich die Schutzkontaktanordnung praktisch entlang des gesamten Eckbereichs zwischen Deckenwand und Seitenwand erstreckt. Dadurch ist auf konstruktiv einfache Weise sichergestellt, dass Wasser, welches in den den Elektromotor aufnehmenden Gehäusebereich eindringt, entweder zuerst mit dem Motorgehäuse oder aber mit der Schutzkontaktanordnung in Kontakt gerät, und da sowohl das Motorgehäuse als auch die Schutzkontaktanordnung an den Schutzleiter angeschlossen sind, wird zuverlässig vermieden, dass bei einer Benetzung von spannungsführenden Teilen über das Wasser auch ein Benutzer mit der Spannung in Kontakt gelangen kann, denn die Versorgungsspannung wird sofort unterbrochen.

Um die Montage der Tauchpumpe zu vereinfachen, ist es günstig, wenn die Schutzkontaktanordnung einstückig ausgestaltet ist.

Vorzugsweise ist die Schutzkontaktanordnung als Flächengebilde ausgestaltet. Sie kann beispielsweise in Form einer Beschichtung oder eines Drahtgeflechtes ausgebildet sein oder auch als dünnwandiges Formteil. Der Platzbedarf derartiger Schutzkontaktanordnungen ist sehr gering und auch deren Handhabung bei der Montage der Tauchpumpe gestaltet sich sehr einfach.

Vorzugsweise ist die Schutzkontaktanordnung als Kontaktblech ausgebildet, insbesondere in Form eines Stanzteiles. Dadurch können die Herstellungskosten der Tauchpumpe gering gehalten werden.

Die Schutzkontaktanordnung kann die Steuerkammer innenseitig zumindest bereichsweise auskleiden, beispielsweise kann sie die Deckenwand der Steuerkammer innenseitig zumindest bereichsweise überdecken. Hierbei kann vorgesehen sein, dass die Schutzkontaktanordnung flächig an einer Wand der Steuerkammer anliegt, insbesondere kann sie flächig an der Deckenwand der Steuerkammer anliegen.

Bei einer bevorzugten Ausgestaltung der Erfindung weist das Gehäuse der Tauchpumpe in der Draufsicht eine Mehreckform auf. Dies hat den Vorteil, dass das Gehäuse bei liegender Stellung nur wenige stabile Lagen einnehmen kann, die durch die Mehreckform vorgegeben sind. Bezüglich dieser vorgegebenen Lagen kann die Schutzkontaktanordnung innerhalb der Steuerkammer derart positioniert werden, dass sie jeweils den tiefsten Punkt der Steuerkammer ausbildet.
Es kann beispielsweise vorgesehen sein, dass das Gehäuse der Tauchpumpe in der Draufsicht im Wesentlichen dreieckförmig ausgestaltet ist. Die Seiten des Dreiecks können hierbei konvex oder konkav gekrümmt sein, insbesondere eine konvexe, also nach außen gerichtete Krümmung hat sich als besonders vorteilhaft erwiesen.

Günstig ist es, wenn das Gehäuse in seinen Eckbereichen außenseitig eine Verstärkung trägt. Dies erhöht nicht nur die mechanische Stabilität des Gehäuses, sondern durch die Verstärkungen können die stabilen Lagen der Tauchpumpe bei liegender Stellung besonders genau definiert werden.

Bei einer vorteilhaften Ausführungsform wird die Steuerkammer, in der die elektrische Schutzkontaktanordnung positioniert ist, von einem Mittelteil des Gehäuses ausgebildet, das zwischen ein Oberteil und ein Unterteil des Gehäuses eingespannt ist. Zur Montage kann die Schutzkontaktanordnung in der Steuerkammer positioniert werden, anschließend kann der Elektromotor unterhalb der Steuerkammer angeordnet werden und in einem weiteren Montageschritt kann dann das die Steuerkammer ausbildende Mittelteil zwischen das Oberteil und das Unterteil des Gehäuses eingespannt werden. Das Oberteil kann einen Tragring aufweisen, an dem der Benutzer die Tauchpumpe für deren Transport auf einfache Weise ergreifen kann. Im Unterteil kann die Ansaugöffnung angeordnet sein. Die Auslassöffnung ist vorzugsweise am Oberteil angeordnet.

Von besonderem Vorteil ist es, wenn die Steuerkammer eine Deckenwand aufweist, an deren Innenseite die Schutzkontaktanordnung angeordnet ist und von der eine Seitenwand in Form einer zylindrischen Hülse absteht, wobei der Elektromotor auf der der Deckenwand abgewandten Seite in die Hülse eintaucht. Die Steuerkammer wird somit in der Gebrauchslage der Tauchpumpe oberseitig von der Deckenwand und seitlich von der Seitenwand begrenzt, wohingegen die untere Begrenzung durch das Motorgehäuse des Elektromotors definiert wird. Die Deckenwand und/oder die Seitenwand der Steuerkammer kann mindestens einen Durchbruch aufweisen, durch den elektrische Anschlussleitungen, insbesondere auch der Schutzleiter, hindurchgeführt sind. Günstigerweise sind die Durchbrüche an der Deckenwand der Steuerkammer positioniert.

Die nachfolgende Beschreibung einer bevorzugten Ausführungsform der Erfindung dient im Zusammenhang mit der Zeichnung der näheren Erläuterung. Es zeigen:

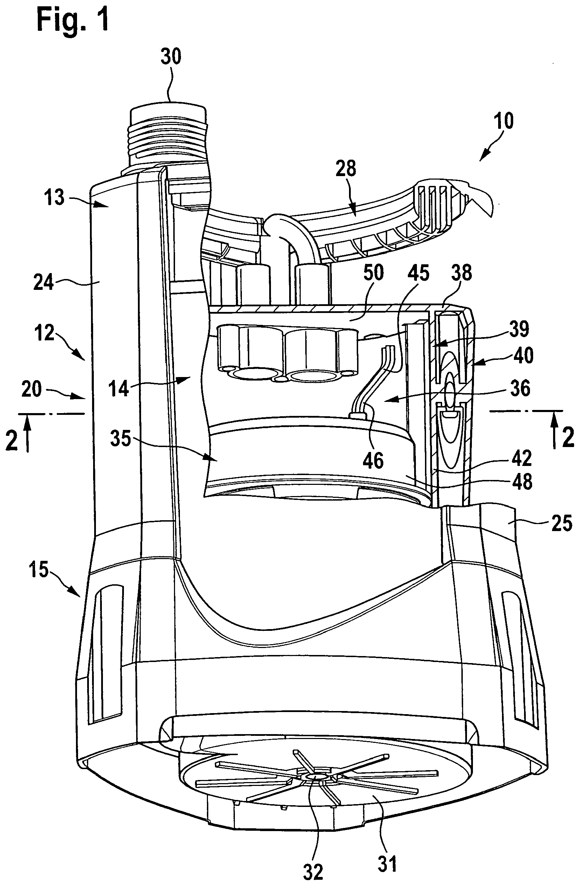

- Figur 1:: Eine teilweise aufgebrochene perspektivische Darstellung einer erfindungsgemäßen Tauchpumpe und
- Figur 2:: eine Schnittansicht längs der Linie 2-2 in Figur 1.

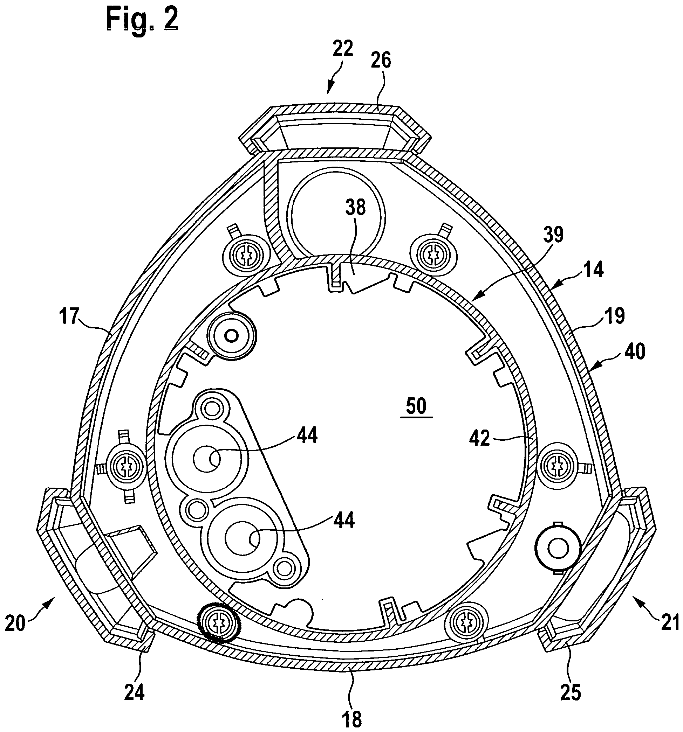

In der Zeichnung ist schematisch eine erfindungsgemäße Tauchpumpe 10 dargestellt mit einem Gehäuse 12, das als dreiteiliges Kunststoffformteil ausgebildet ist mit einem Oberteil 13, einem Mittelteil 14 und einem Unterteil 15. Wie aus Figur 2 deutlich wird, ist das Gehäuse 12 in der Draufsicht im Wesentlichen dreieckförmig mit konvex nach außen gekrümmten Seitenflächen 17, 18, 19 ausgebildet. In den Eckbereichen 20, 21, 22 des Gehäuses 12 sind Verstärkungen in Form von Haltearmen 24, 25, 26 angeordnet, die sich ausgehend von einem Tragring 28 des Oberteils 13 außenseitig am Mittelteil 14 entlang bis zum Unterteil 15 erstrecken. Sie sind mit dem Unterteil 15 verschraubt, wobei durch die Verschraubung das Mittelteil 14 zwischen das Oberteil 13 und das Unterteil 15 eingespannt ist.

Das Oberteil 13 weist oberhalb des Tragringes 28 eine Auslassöffnung 30 auf, und das Unterteil 15 weist in einer Bodenwand 31 eine Ansaugöffnung 32 auf. Mit Hilfe eines Pumpelementes, beispielsweise eines im Unterteil 15 angeordneten, drehend antreibbarten Laufrades, kann Flüssigkeit durch die Ansaugöffnung 32 hindurch angesaugt werden, und über die Auslassöffnung 30 kann die Flüssigkeit abgegeben werden. Die Auslassöffnung 30 weist außenseitig ein Gewinde auf, an das beispielsweise ein Druckschlauch angeschlossen werden kann zum Abführen der Flüssigkeit.

Zum Antrieb weist die Tauchpumpe 10 einen Elektromotor 35 auf. Dieser taucht unterseitig in eine Steuerkammer 36 ein, die vom Mittelteil 14 ausgebildet wird. Hierzu weist das Mittelteil eine Deckenwand 38 auf, die im Abstand zum Tragring 28 angeordnet ist und von der sich eine innere Seitenwand 39 und eine äußere Seitenwand 40 nach unten in Richtung auf das Unterteil 15 erstrecken. Die innere Seitenwand 39 bildet eine zylindrische Hülse 42 aus und die äußere Seitenwand 40 bildet zwischen den Haltearmen 24, 25 und 26 die im Wesentlichen dreieckförmige Außenwand des Mittelteiles 14 mit den Seitenflächen 17, 18 und 19 aus. Zwischen der inneren Seitenwand 39 und der äußeren Seitenwand 40 kann die über die Ansaugöffnung 32 angesaugte Flüssigkeit zur Auslassöffnung 30 geführt werden.

Das Mittelteil 14 bildet ein einstückiges Kunststoffformteil aus dergestalt, dass die innere Seitenwand 39 und die äußere Seitenwand 40 einstückig mit der Deckenwand 38 verbunden sind. In der Deckenwand 38 sind mehrere Durchbrüche 44 angeordnet, durch die Anschlussleitungen 45, insbesondere ein elektrischer Schutzleiter 46 durch die Deckenwand 38 in die Steuerkammer 36 geführt sind. Die Durchbrüche 44 sind flüssigkeitsdicht abgedichtet und auch der unterseitig in die Steuerkammer 36 eintauchende Elektromotor liegt mittels an sich bekannter und deshalb in der Zeichnung nicht dargestellter Dichtringe flüssigkeitsdicht an der Innenseite der zylindrischen Hülse 42 an. Im Normalbetrieb der Tauchpumpe 10 kann daher bei ordnungsgemäßer Montage und unbeschädigten Dichtelementen kein Wasser in das Innere der Steuerkammer 36 eindringen.

Der elektrische Schutzleiter 46 ist an ein Motorgehäuse 48 des Elektromotors 35 angeschlossen. Außerdem ist an den elektrischen Schutzleiter 46 über eine in der Zeichnung nicht dargestellte Verbindungsleitung eine elektrische Schutzkontaktanordnung in Form eines Kontaktbleches 50 angeschlossen, das innenseitig an der Deckenwand 38 anliegt und diese zu einem großen Teil abdeckt. Das Kontaktblech erstreckt sich bis in den Eckbereich zwischen der Deckenwand 38 und der inneren Seitenwand 39. Dies gilt insbesondere für die Eckbereiche zwischen Deckenwand 38 und innerer Seitenwand 39, die bei einer stabilen liegenden Stellung der Tauchpumpe 10, wie sie in Figur 2 dargestellt ist, den tiefsten Punkt der Steuerkammer 36 ausbilden. Die tiefsten Punkte werden bei liegender Stellung der Tauchpumpe aufgrund von deren in der Draufsicht dreieckförmigen Gestalt durch die mittigen Bereiche zwischen den Haltearmen 24, 25 und 26 definiert. Das Kontaktblech 50 erstreckt sich insbesondere bis in diese Bereiche.

Nimmt die Tauchpumpe 10 eine über Kopf stehende Stellung ein, so bildet die Innenseite der Deckenwand 38 den tiefsten Punkt der Steuerkammer 36, und da das Kontaktblech 50 innenseitig an der Deckenwand 38 angeordnet ist, erstreckt es sich auch bei über Kopf stehender Tauchpumpe 10 bis zum tiefsten Punkt der Steuerkammer 36.

Da sowohl das Kontaktblech 50 als auch das Motorgehäuse 48 an den Schutzleiter 46 angeschlossen sind, ist sichergestellt, dass bei Eindringen von Wasser in die Steuerkammer 36 das Wasser über das Motorgehäuse 48 bzw. über das Kontaktblech 50 zuerst mit dem elektrischen Schutzleiter 46 in Kontakt kommt, bevor es spannungsführende Teile der Tauchpumpe, beispielsweise die elektrischen Anschlussleitungen 45 erreichen kann. Kommt das Wasser nach der Kontaktierung des Motorgehäuses 48 oder des Kontaktbleches 50 auch mit spannungsführenden Teilen in Kontakt, so ist sofort eine leitende Verbindung zum Schutzleiter 46 gewährleistet, so dass sich zwischen dem spannungsführenden Teil und dem Schutzleiter 46 ein Kurzschluss ausbildet und die Versorgungsspannung mittels einer an sich bekannten und deshalb in der Zeichnung nicht dargestellten Sicherung innerhalb sehr kurzer Zeit abgetrennt werden kann.

## Patentansprüche

1. Tauchpumpe (10) mit einem Gehäuse (12), das eine Ansaugöffnung (32) zum Ansaugen von Flüssigkeit und eine Auslassöffnung (30) zum Abgeben von Flüssigkeit aufweist und das einen Elektromotor (35) aufnimmt, wobei der Elektromotor ein elektrisch leitendes Motorgehäuse (48) umfasst, das an einen Schutzleiter anschließbar ist, **dadurch gekennzeichnet, dass** das Gehäuse (12) zur Aufnahme elektrischer Bauteile (45) eine in der Gebrauchslage der Tauchpumpe (10) oberhalb des Elektromotors (35) angeordnete Steuerkammer (36) ausbildet, in der eine mit dem Schutzleiter (46) verbindbare elektrische Schutzkontaktanordnung (50) angeordnet ist, wobei sich die Schutzkontaktanordnung (50) bis in die Bereiche der Steuerkammer (36) erstreckt, die bei über Kopf stehender oder eine stabile liegende Stellung einnehmender Tauchpumpe (10) den tiefsten Punkt der Steuerkammer (36) ausbilden.

2. Tauchpumpe nach Anspruch 1, **dadurch gekennzeichnet, dass** die Schutzkontaktanordnung (50) an einer Deckenwand (38) der Steuerkammer angeordnet ist.

3. Tauchpumpe nach Anspruch 1 oder 2, **dadurch gekennzeichnet, dass** die Steuerkammer (36) eine Deckenwand (38) sowie eine von der Deckenwand (38) abstehende Seitenwand (39) aufweist und dass sich die Schutzkontaktanordnung (50) bis in den Eckbereich zwischen Deckenwand (38) und Seitenwand (39) erstreckt.

4. Tauchpumpe nach einem der voranstehenden Ansprüche, **dadurch gekennzeichnet, dass** die Schutzkontaktanordnung (50) einstückig ausgestaltet ist.

5. Tauchpumpe nach einem der voranstehenden Ansprüche, **dadurch gekennzeichnet, dass** die Schutzkontaktanordnung (50) als Flächengebilde ausgestaltet ist.

6. Tauchpumpe nach einem der voranstehenden Ansprüche, **dadurch gekennzeichnet, dass** die Schutzkontaktanordnung als Kontaktblech (50) ausgestaltet ist.

7. Tauchpumpe nach einem der voranstehenden Ansprüche, **dadurch gekennzeichnet, dass** das Gehäuse (12) der Tauchpumpe (10) in der Draufsicht eine Mehreckform aufweist.

8. Tauchpumpe nach Anspruch 7, **dadurch gekennzeichnet, dass** Gehäuse (12) in der Draufsicht im Wesentlichen dreieckförmig ausgestaltet ist.

9. Tauchpumpe nach Anspruch 7 oder 8, **dadurch gekennzeichnet, dass** das Gehäuse (12) in seinen Eckbereichen (20, 21, 22) außenseitig eine Verstärkung (24, 25, 26) trägt.

10. Tauchpumpe nach einem der voranstehenden Ansprüche, **dadurch gekennzeichnet, dass** das Gehäuse (12) ein Oberteil (13), ein Mittelteil (14) und ein Unterteil (15) umfasst, wobei das Mittelteil (14) die Steuerkammer (36) ausbildet und zwischen das Oberteil (13) und das Unterteil (15) eingespannt ist.

11. Tauchpumpe nach Anspruch 10, **dadurch gekennzeichnet, dass** die Steuerkammer (36) eine Deckenwand (38) aufweist, an deren Innenseite die Schutzkontaktanordnung (50) angeordnet ist und von der eine Seitenwand (39) in Form einer zylindrischen Hülse (42) absteht, wobei der Elektromotor (35) auf der der Deckenwand (38) abgewandten Seite in die Hülse (42) eintaucht.

## Claims

1. Submersible pump (10) with a housing (12) which comprises a suction opening (32) for drawing in liquid and an outlet opening (30) for discharging liquid and which accommodates an electric motor (35), the electric motor having an electrically conductive motor housing (48) which is connectable to a protective earth conductor, **characterized in that** for accommodating electric components (45), the housing (12) forms a control chamber (36), which, in the operating position of the submersible pump (10), is arranged above the electric motor (35), and in which an electric protective earth contact arrangement (50) connectable to the protective earth conductor (46) is arranged, the protective earth contact arrangement (50) extending as far as the areas of the control chamber (36) which form the lowest point of the control chamber (36) when the submersible pump (10) is upside down or assumes a stable lying position.

2. Submersible pump in accordance with claim 1, **characterized in that** the protective earth contact arrangement (50) is arranged on a ceiling wall (38) of the control chamber.

3. Submersible pump in accordance with claim 1 or 2, **characterized in that** the control chamber (36) comprises a ceiling wall (38) and a side wall (39) projecting from the ceiling wall (38), and **in that** the protective earth contact arrangement (50) extends as far as the corner area between ceiling wall (38) and side wall (39).

4. Submersible pump in accordance with any one of the preceding claims, **characterized in that** the protective earth contact arrangement (50) is of one-piece configuration.

5. Submersible pump in accordance with any one of the preceding claims, **characterized in that** the protective earth contact arrangement (50) is configured as surface structure.

6. Submersible pump in accordance with any one of the preceding claims, **characterized in that** the protective earth contact arrangement is configured as contact plate (50).

7. Submersible pump in accordance with any one of the preceding claims, **characterized in that** the housing (12) of the submersible pump (10) is of polygonal shape in a plan view.

8. Submersible pump in accordance with claim 7, **characterized in that** the housing (12) is of substantially triangular configuration in a plan view.

9. Submersible pump in accordance with claim 7 or 8, **characterized in that** the housing (12) carries in its corner areas (20, 21, 22) on the outer side a reinforcement (24, 25, 26).

10. Submersible pump in accordance with any one of the preceding claims, **characterized in that** the housing (12) has an upper part (13), a middle part (14) and a lower part (15), with the middle part (14) forming the control chamber (36) and being clamped between the upper part (13) and the lower part (15).

11. Submersible pump in accordance with claim 10, **characterized in that** the control chamber (36) has a ceiling wall (38), on the inner side of which the protective earth contact arrangement (50) is arranged and from which a side wall (39) projects in the form of a cylindrical sleeve (42), with the electric motor (35) extending into the sleeve (42) on the side that faces away from the ceiling wall (38).

## Revendications

1. Pompe immergée (10) comprenant un carter (12), lequel présente un orifice d'aspiration (32) destiné à aspirer du liquide et un orifice d'évacuation (30) destiné à évacuer du liquide et lequel loge un moteur électrique (35), le moteur électrique (35) comportant un carter de moteur (48) électro-conducteur, qui peut être raccordé à un conducteur de protection, **caractérisé en ce que** le carter (12) destiné à loger des composants électriques (45) constitue une chambre de commande (36) qui est agencée au-dessus du moteur électrique (35) lorsque la pompe immergée (10) se trouve dans la position d'utilisation et dans laquelle est agencé un ensemble de contact de protection (50) électrique qui peut être relié au conducteur de protection (46), l'ensemble de contact de protection (50) s'étendant jusqu'aux régions de la chambre de commande (36) qui constituent le point le plus bas de la chambre de commande (36) lorsque la pompe immergée (10) se trouve à la verticale avec la tête en bas ou qu'elle adopte une position couchée stable.

2. Pompe immergée selon la revendication 1, **caractérisée en ce que** l'ensemble de contact de protection (50) est agencé sur une paroi supérieure (38) de la chambre de commande.

3. Pompe immergée selon la revendication 1 ou 2, **caractérisée en ce que** la chambre de commande (36) comprend une paroi supérieure (38) ainsi qu'une paroi latérale (39) faisant saillie de la paroi supérieure (38) et **en ce que** l'ensemble de contact de protection (50) s'étend jusque dans la région angulaire située entre la paroi supérieure (38) et la paroi latérale (39).

4. Pompe immergée selon l'une quelconque des revendications précédentes, **caractérisée en ce que** l'ensemble de contact de protection (50) est réalisé d'une seule pièce.

5. Pompe immergée selon l'une quelconque des revendications précédentes, **caractérisée en ce que** l'ensemble de contact de protection (50) est réalisé sous la forme d'une structure plane.

6. Pompe immergée selon l'une quelconque des revendications précédentes, **caractérisée en ce que** l'ensemble de contact de protection est réalisé sous la forme d'une tôle de contact (50).

7. Pompe immergée selon l'une quelconque des revendications précédentes, **caractérisée en ce que** le carter (12) de la pompe immergée (10) présente une forme polygonale en vue de dessus.

8. Pompe immergée selon la revendication 7, **caractérisée en ce que** le carter (12) est sensiblement triangulaire en vue de dessus.

9. Pompe immergée selon la revendication 7 ou 8, **caractérisée en ce que** le carter (12) comporte un renforcement (24, 25, 26) sur une face extérieure dans ses régions angulaires (20, 21, 22).

10. Pompe immergée selon l'une quelconque des revendications précédentes, **caractérisée en ce que** le carter (12) comprend une partie supérieure (13), une partie centrale (14) et une partie inférieure (15), la partie centrale (14) constituant la chambre de commande (36) et étant serrée entre la partie supérieure (13) et la partie inférieure (15).

11. Pompe immergée selon la revendication 10, **caractérisée en ce que** la chambre de commande (36) comprend une paroi supérieure (38) sur la face intérieure de laquelle l'ensemble de contact de protection (50) est agencé et de laquelle une paroi latérale (39) prenant la forme d'un manchon cylindrique (42) fait saillie, le moteur électrique (35) pénétrant dans le manchon (42) sur la face opposée à la paroi supérieure (38).
